# EUROPEAN PATENT SPECIFICATION

(11) **EP 3 540 255 B1**
(45) Date of publication and mention of the grant of the patent: **15.09.2021**
(21) Application number: 17868539.2
(22) Date of filing: 08.11.2017
(51) Int. Cl.: B23Q 17/09, F16C 37/00, F16C 33/66, F16C 19/52, F16C 19/18, F16C 41/00, F16C 19/54, F16C 35/12, B23Q 11/12

(54) **COOLING STRUCTURE FOR A BEARING DEVICE**
KÜHLSTRUKTUR FÜR EINE LAGERVORRICHTUNG
STRUCTURE DE REFROIDISSEMENT DE PALIER

(30) Priority: 10.11.2016 JP 2016219512
(43) Date of publication of application: 18.09.2019
(73) Proprietor: NTN Corporation, Osaka-shi, Osaka 550-0003 (JP)
(72) Inventor: NASU, Keisuke, Kuwana-shi Mie 511-8678 (JP)
(74) Representative: Patent- und Rechtsanwälte Behrmann Wagner PartG mbB
(86) International application number: PCT/JP2017/040200
(87) International publication number: WO 2018/088414

(56) References cited:
- EP-A1- 2 037 141
- WO-A1-2014/046153
- JP-A- H1 034 494
- JP-A- 2004 100 729
- JP-A- 2006 022 865
- JP-A- 2008 075 882
- JP-A- 2008 106 891
- US-A1- 2007 189 650
- US-A1- 2010 202 720

## Description

### BACKGROUND OF THE INVENTION

### (Field of the Invention)

The present invention relates to a cooling structure for a bearing device and, for example, to a cooling structure for a spindle of a machine tool and a bearing incorporated into the spindle.

### (Description of Related Art)

For spindle devices of machine tools, it is necessary to suppress temperature rise in the devices to ensure processing accuracy. However, recent machine tools tend to be operated at higher speed in order to improve processing efficiency, resulting in increased heat generation from bearings that support the spindles as the speed increases. Moreover, spindle devices of so-called built-in motor type having a driving motor incorporated therein are becoming more common, which also causes heat generation in the devices.

In view of speeding up and higher precision of the spindles, temperature rise in the bearings due to heat generation has to be minimized because it would lead to increase in preload. As means for suppressing temperature rise in a spindle device, compressed air for cooling is supplied to bearings to cool a spindle and the bearings (for example, Patent Document 1). In Patent Document 1, cold air is injected into a space between two bearings at an angle relative to a rotational direction so as to produce a swirl flow, and the spindle and the bearings are cooled thereby.

Also, a cooling structure has been proposed, which is provided with an annular recess on a circumferential surface of an outer ring spacer, which faces an inner ring spacer, and with an air nozzle having an outlet open to the recess so as to discharge compressed air for cooling toward a circumferential surface of the inner ring spacer (Patent Document 2). The outer ring spacer is provided with a lubrication fluid discharge unit configured to supply air oil for lubrication for rolling bearings on both sides of the outer ring spacer.

According to this configuration, the compressed air is discharged vigorously from a narrow nozzle hole into a space formed from the recess, and the compressed air is adiabatically expanded. This results in increase in the flow velocity and drop in the temperature of the compressed air. Thus, the rotary-side spacer is efficiently cooled.

### [Related Document]

### [Patent Document]

[Patent Document 1] JP Laid-open Patent Publication No. 2000-161375
[Patent Document 2] JP Laid-open Patent Publication No. 2015-183738

A bearing device including a cooling structure as described in Patent Document 2 and three or more rows of rolling bearings was assembled to monitor temperatures at the respective rolling bearings. From the monitoring, it was found that the bearings arranged in multiple rows have different temperatures. The difference in temperatures varies depending on driving methods and/or bearing arrangement. For this reason, it is required to selectively cool a portion of the bearing device where a bearing temperature is high in order to effectively use limited compressed air.

Accordingly, the inventor made observation through testing or simulation on temperatures of respective bearings in a cooling structure for a bearing device to be implemented and considered adjusting flow rates from individual air nozzles to selectively cool a portion of the bearing device where a bearing temperature is high.

However, depending on different operating conditions of the bearing device, different rolling bearings would have a high temperature. In particular, in machine tools, different rolling bearings would have a high temperature due to, for example, difference in load applied thereto depending on types of processing, even if the same machine tool is used. For this reason, there is a risk that suitable cooling may not be sufficiently performed, even if the flow rates from the individual air nozzles are regulated in accordance with the temperatures of the respective bearings determined from testing or simulation. Further, the following relevant documents are known: JP 2006 022865 A, EP 2 037 141 A1, US 2010/202720 A1 and US 2007/189650 A1.

JP 2006 022865 A discloses a cooling structure according to the preamble of claim 1.

### SUMMARY OF THE INVENTION

The object of the present invention is to provide a cooling structure with a bearing device which is capable of, upon air-cooling rolling bearings arranged in three or more rows, selectively cooling a portion of the bearing device where a bearing temperature is high, even under varying operating conditions, so that limited compressed air can be effectively used.

A cooling structure for a bearing device according to the present invention is a cooling structure for a bearing device, the bearing device having: rolling bearings arranged in three or more rows in an axial direction, each of the rolling bearings having an outer ring and an inner ring; outer ring spacers interposed between the outer rings of the respective rolling bearings adjacent in the rows; and inner ring spacers interposed between the inner rings of the respective rolling bearings adjacent in the rows, the outer rings and the outer ring spacers being disposed on an inner circumference of a housing, the inner rings and the inner ring spacers being fitted to an outer circumference of a rotation shaft,
the cooling structure including:
air nozzles provided in a plurality of the outer ring spacers and configured to discharge compressed air toward the inner ring spacers that face the outer ring spacers;
valves configured to regulate the compressed air discharged from the respective air nozzles;
a control unit configured to control the valves; and
a plurality of temperature measuring units configured to measure temperatures of the rolling bearings in the three or more rows,
wherein the control unit uses measurement values of the temperatures obtained by the plurality of temperature measuring units to control the valves so that the compressed air is discharged from the air nozzle selected in accordance with a predetermined rule.

According to this configuration, the measurement values of the temperatures obtained by the temperature measuring units in the respective rolling bearings are used to control the valves so that the compressed air is discharged from a specified air nozzle. Thus, it is possible to selectively cool a portion of the bearing device where a bearing temperature is high, even under varying operating conditions, so that limited compressed air can be effectively used.

It should be noted that the term "valve(s)" used herein generally refers to any means for performing open/close operation, switching operation, or flow rate regulation for the compressed air supplying passage.

In the present invention, the control unit may be configured to use the measurement values of the temperatures obtained by the plurality of temperature measuring units to control the valves so that the compressed air is discharged from the air nozzle that faces the inner ring spacer adjacent to the rolling bearing having a highest temperature.

In this configuration, while the compressed air is being discharged toward the inner ring spacer neighboring the rolling bearing having a highest temperature, if another rolling bearing has come to have a highest temperature during the operation, the compressed air will then be discharged toward the inner ring spacer neighboring that rolling bearing. In this way, the compressed air is always discharged toward the inner ring spacer neighboring the rolling bearing having a highest temperature, which enables simple control for effectively cooling each of the rolling bearings.

In the present invention, the cooling structure has a both-side exhaust passage between any of the outer ring spacers and the inner ring spacer which corresponds to said outer ring spacer, the both-side exhaust passage being configured to exhaust the compressed air discharged from the air nozzle toward the rolling bearings on both sides, which are adjacent to said outer ring spacer; and a one-side exhaust passage between any of the other outer ring spacers and the inner ring spacer which corresponds to said outer ring spacer, the one-side exhaust passage being configured to exhaust the compressed air discharged from the air nozzle toward the rolling bearing on one side, which is adjacent to said outer ring spacer.

Each of the outer ring spacers may have a lubrication fluid discharge unit configured to supply lubrication fluid to the adjacent rolling bearing. Where the lubrication fluid and the compressed air discharged from the air nozzle toward the rolling bearings on both sides, which are adjacent to the outer ring spacer, flow in the same direction, the both-side exhaust passage for the compressed air allows the lubrication fluid to be assisted by the compressed air so that the lubrication fluid better passes through and flowing out from the rolling bearings, resulting in improved reliability of lubrication. In contrast, where the compressed air toward the rolling bearing on one side, which is adjacent to the outer ring spacer, flows oppositely to the lubrication fluid from another outer ring spacer toward the same rolling bearing, the lubrication fluid flows mixedly with the compressed air. Thus, the lubrication fluid has difficulty in passing through and flowing out from the rolling bearing, resulting in degradation in reliability of lubrication. In the latter case, provision of the one-side exhaust passage makes it possible to avoid mixing of the flows so as to ensure reliability of lubrication.

In the present invention, the one-side exhaust passage has a gap between the outer ring spacer and the inner ring spacer; and an annular space defined between the outer ring spacer and the inner ring spacer, the annular space having a larger radial dimension than that of the gap. The air nozzle is open to the annular space. The annular space has a portion on one side relative to the central axis of the air nozzle, the portion having a larger volume than that of a portion on the other side.

The compressed air discharged from the air nozzle into the annular space is more likely to flow into a portion of the space which has a larger volume, of two portions of the annular space on both sides relative to the central axis of the air nozzle. Thus, the one-side exhaust passage can be configured to actively exhaust the compressed air discharged from the air nozzle toward the adjacent rolling bearing on one side.

In the present invention, each of the outer ring spacers having the air nozzles may have a lubrication fluid discharge unit configured to supply lubrication fluid including air and lubrication oil to the adjacent rolling bearing.

According to this configuration, the rolling bearings can be cooled and lubricated via means provided in the outer ring spacers. In such a case, it is also possible to selectively cool a portion of the bearing device where a bearing temperature is higher, even under varying operating conditions, in a similar manner as described above.

It should be noted that when the one-side exhaust passage in this configuration is provided by changing the volumes of the two portions of the annular space on both sides relative to the central axis of the air nozzle, it is possible to prevent the compressed air discharged into the rolling bearing from flowing mixedly with the lubrication fluid discharged into the same rolling bearing from a different direction.

Any combination of at least two configurations disclosed in the appended claims and/or the specification and/or the accompanying drawings should be construed as being included within the scope of the present invention as defined in the appended claims.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 illustrates a conceptual configuration of a cooling structure for a bearing device according to a first embodiment of the present invention;
Fig. 2 is a flow chart showing an example of processing by a control unit of the cooling structure for the bearing device;
Fig. 3A illustrates an example of temperature gradient in the bearing device;
Fig. 3B illustrates another example of temperature gradient in the bearing device;
Fig. 3C illustrates still another example of temperature gradient in the bearing device;
Fig. 4A shows an example of result of simulation showing a relation between locations of bearings and bearing temperatures in the cooling structure for the bearing device when compressed air is not supplied;
Fig. 4B shows an example of result of simulation showing a relation between locations of bearings and bearing temperatures in the cooling structure for the bearing device when compressed air is supplied;
Fig. 5 is a sectional view of a bearing device part in a spindle device of a machine tool having a cooling structure for a bearing device implemented according to the embodiment shown in Fig. 1;
Fig. 6 is a partial enlarged sectional view of the cooling structure for the rolling bearings in the middle two rows in the bearing device;
Fig. 7 is a cross-sectional view of the spacer part of the bearing device;
Fig. 8 is a partial enlarged sectional view of the cooling structure for the rolling bearing at an end of the bearing device;
Fig. 9 is a partial section view of a cooling structure for a bearing device according to a second embodiment of the present invention;
Fig. 10 is a partial enlarged sectional view of the cooling structure for the bearing device;
Fig. 11 is a schematic sectional view showing an example of a spindle device of a machine tool to which a cooling structure for a bearing device according to each of the above-described embodiments is applied; and
Fig. 12 is a schematic sectional view showing another example of a spindle device of a machine tool to which a cooling structure for a bearing device according to each of the above-described embodiments is applied.

### DESCRIPTION OF THE EMBODIMENTS

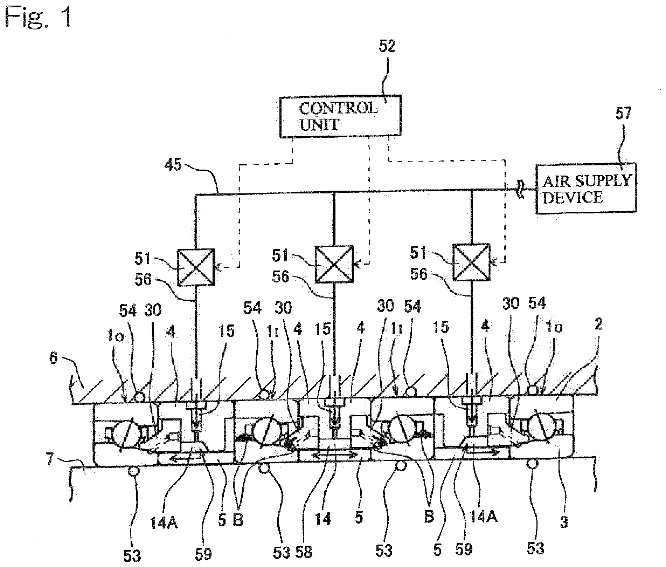

A first embodiment of the present invention will be described with reference to Fig. 1 to Fig. 8. As shown in Fig. 1, a cooling structure for a bearing device J according to the first embodiment includes rolling bearings 1 arranged in three or more rows (four rows in the illustrated example) in an axial direction, each of the rolling bearings 1 having an outer ring 2 and an inner ring 3; outer ring spacers 4 interposed between the outer rings 2, 2 of the respective rolling bearings 1,1 adjacent in the rows; and inner ring spacers 5 interposed between the inner rings 3, 3 of the respective rolling bearings adjacent in the rows. The outer rings 2 and the outer ring spacers 4 are disposed on an inner circumference of a housing 6, and the inner rings 3 and the inner ring spacers 5 are fitted to an outer circumference of a spindle 7 that is a rotation shaft.

The cooling structure has air nozzles 15 disposed in the outer ring spacers 4 and configured to discharge compressed air toward the inner ring spacers 5 that face the outer ring spacers 4; valves 51 configured to regulate the compressed air discharged from the respective air nozzles 15; a control unit 52 configured to control the valves 51; and a plurality of temperature measuring units 53, 54 configured to measure temperatures of the rolling bearings 1 in the three or more rows.

Each of the air nozzles 15 is connected to an air supply device 57 configured to discharge the compressed air via a compressed air introduction passage 45 and a branch air supply passage 56. Each of the valves 51 includes an electromagnetic valve, such as an electromagnetic on-off valve, and is operable to open and close in response to a control signal sent from the control unit 52. The valves 51 may be collectively formed as a switching valve or a plurality of switching valves configured to switch flow passage(s). The temperature measuring units 53, 54 include thermistors or thermocouples and are disposed on the spindle 7 and the housing 6 so as to respectively contact the inner ring 3 and the outer ring 2 in each of the rolling bearings 1. These temperature measuring units 53, 54 are connected to the control unit 52. The temperature measuring units 53 disposed on the spindle 7 may have a signal line (not illustrated) that is led out to a stationary side at an end of the spindle via a slip ring (not illustrated) or may use wireless communication, instead of a signal line.

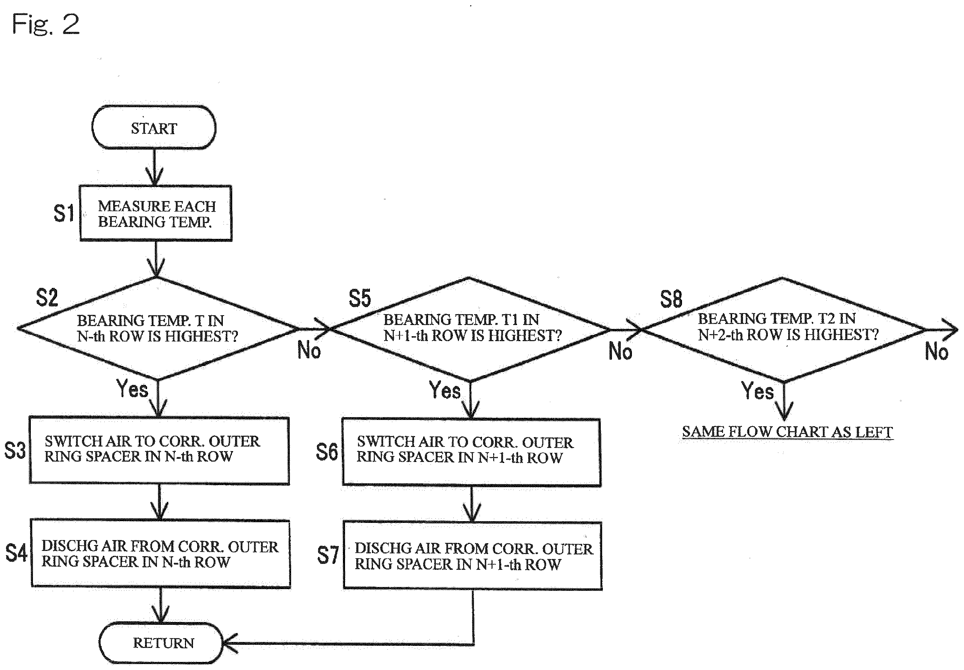

The control unit 52 uses measurement values of the temperatures of the rolling bearings 1 (for example, a difference between the inner ring temperature and the outer ring temperature) obtained by the plurality of temperature measuring units 53, 54 to control the valves 51 so as to discharge the compressed air from the air nozzle 15 selected in accordance with a predetermined rule. The control unit 52 includes an electronic circuit, such as a microcomputer, or a relay circuit. The predetermined rule may be arbitrarily designed. For example, the predetermined rule may include controlling the valves 51 so that the compressed air is discharged from the air nozzle 15 that faces the inner ring spacer 5 adjacent to the rolling bearing 1 having a highest temperature. Fig. 2 shows a flow chart showing a specific example of such control, which will be described later.

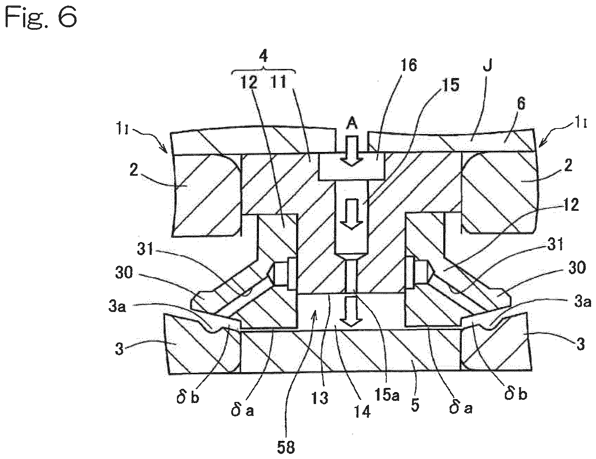

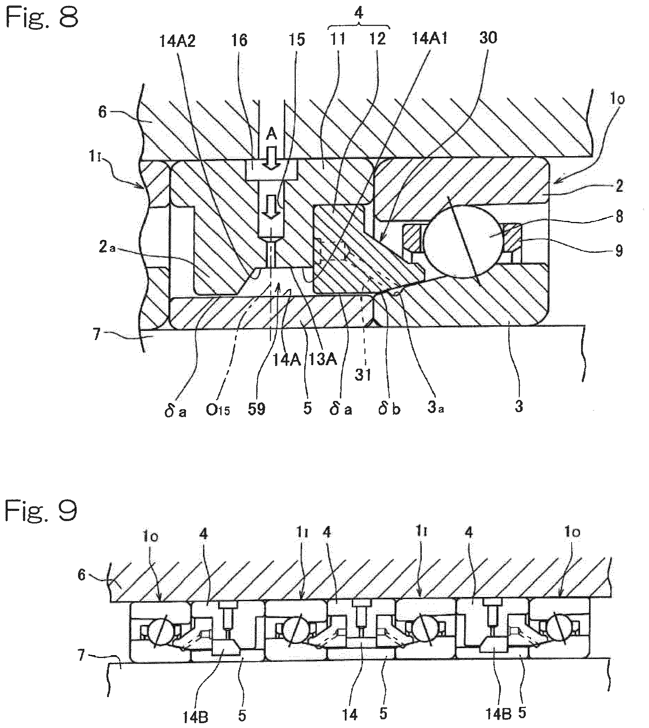

The cooling structure includes a both-side exhaust passage 58 between any of the outer ring spacers 4 (specifically, the outer ring spacer 4 in the middle row) and the corresponding inner ring spacer 5, the both-side exhaust passage being configured to exhaust the compressed air discharged from the air nozzle 15 toward the rolling bearings 1, 1 on both sides, which are adjacent to said outer ring spacer 4. The cooling structure may include a one-side exhaust passage 59 between any of the other outer ring spacers (specifically, the outer ring spacer 4 on each of the opposite ends) and the corresponding inner ring spacer 5, the one-side exhaust passage being configured to exhaust the compressed air discharged from the air nozzle 15 toward the rolling bearing 1 on one side, which is adjacent to said outer ring spacer 4. Each of the outer ring spacers 4 having the air nozzles 15 also has a lubrication fluid discharge unit 30 configured to supply lubrication fluid including air and lubrication oil to the adjacent rolling bearing 1. The both-side exhaust passage 58, the one-side exhaust passage 59, and the lubrication fluid discharge unit 30 will be specifically described later with reference to Fig. 6, Fig. 8 and so on.

According to this configuration, the control unit 52 uses measurement values of the temperatures obtained by the temperature measuring units 53, 54 in the respective rolling bearings 1 to control the valves 51 so as to discharge the compressed air from a specified air nozzle 15. Thus, it is possible to always selectively cool a portion of the bearing device where a bearing temperature is high, even under varying operating conditions, so that limited compressed air can be effectively used.

An example of processing by the control unit 52 will be described with reference to Fig. 2. The temperatures of the inner ring and the outer ring of each rolling bearing 1 are measured by the temperature measuring units 53, 54 (step S1) to determine which row of the rolling bearings 1 has a highest temperature (steps S2, S5, S8, etc.). To be more specific, first, it is determined whether or not a bearing temperature T in the N-th row (N is a natural number) is the highest temperature (step S2). In this example, the bearing temperature T is a difference between the temperature of the inner ring and the temperature of the outer ring. Although it is possible to determine the bearing temperature which affects the operation only with the temperature of the inner ring, use of such a difference allows accurate determination to be made. If the bearing temperature T in the N-th row is the highest temperature, the valve 51 is switched to be open to the air nozzle 15 of the corresponding outer ring spacer 4 in the N-th row (step S3), and the compressed air is discharged from the air nozzle 15 of the corresponding outer ring spacer 4 in the N-th row (step S4).

If the condition that the bearing temperature T in the N-th row is the highest temperature is not satisfied in step S2, it is determined whether or not a bearing temperature T1 in the N+1-th row is the highest temperature (step S5). If it is the highest temperature, the valve 51 is switched to be open to the air nozzle 15 of the corresponding outer ring spacer 4 in the N+1-th row (step S6), and the compressed air is discharged from the air nozzle 15 of the corresponding outer ring spacer 4 in the N+1-th row (step S7).

When neither of the bearing temperatures T, T1 in the N-th and N+1-th rows is not the highest temperature, it is determined whether or not a bearing temperature T2 in the N+2-th row is the highest temperature (step S8). Such determination is continued to be made until the condition that a bearing temperature in one of the rows is the highest temperature is satisfied. Once the condition is satisfied in a row, the valve is switched to discharge the compressed air to that row, and then the process returns to step 1. It should be noted that in a case where the determination is made to the N+n-th row that is an end of the rows, and the condition that a bearing temperature Tn is the highest temperature is not satisfied, the determination returns to and is continued from the first row that is the other end of the rows.

In such a way, the compressed air is always discharged toward the inner ring spacer 5 neighboring the rolling bearing 1 having a highest temperature, which enables simple control for effectively using the compressed air to cool each of the rolling bearings 1.

In addition, where the lubrication fluid and the compressed air discharged from the air nozzle toward the rolling bearings on both sides, which are adjacent to the outer ring spacer, flow in the same direction, the both-side exhaust passage 58 for the compressed air allows the lubrication fluid to be assisted by the compressed air so that the lubrication fluid better passes through and flowing out from the rolling bearings 1, resulting in improved reliability of lubrication (see the middle outer ring spacer in Fig. 1). In contrast, where the compressed air toward the rolling bearing on one side, which is adjacent to the outer ring spacer, flows oppositely to the lubrication fluid from another outer ring spacer toward the same rolling bearing, the lubrication fluid flows mixedly with the compressed air. Thus, the lubrication fluid has difficulty in passing through and flowing out from the rolling bearing, resulting in degradation in reliability of lubrication. In a case of the present embodiment, provision of the one-side exhaust passage 59 makes it possible to avoid mixing of the flows so as to ensure reliability of lubrication.

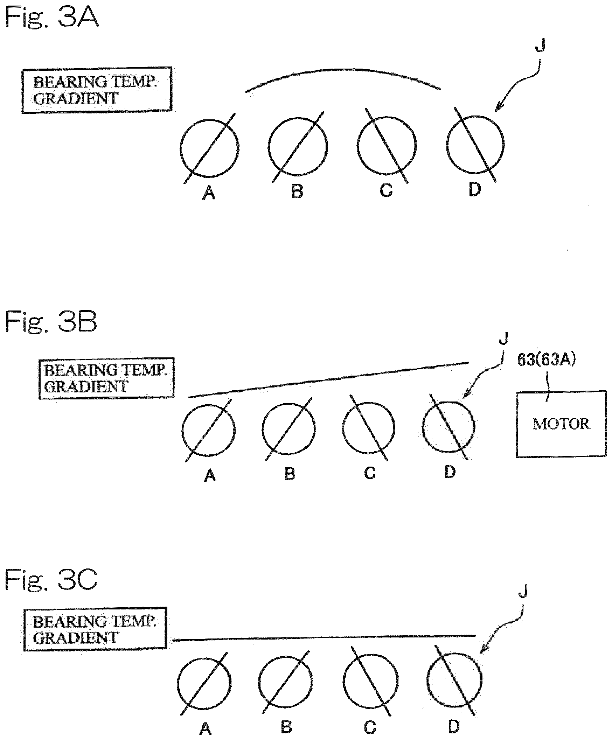

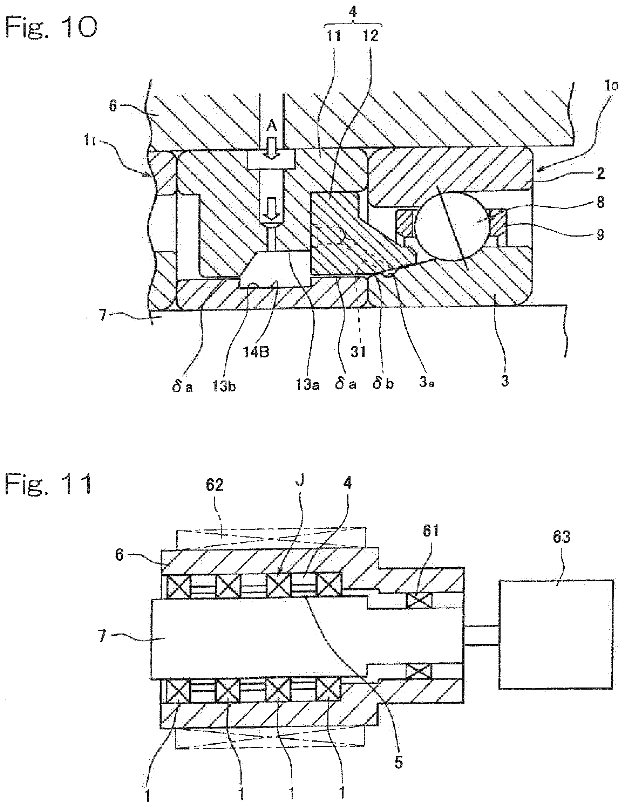

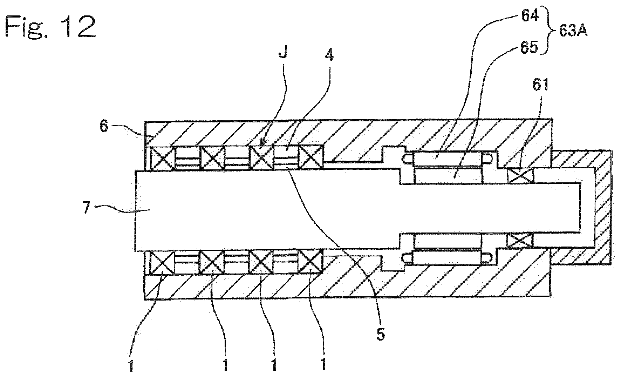

Fig. 3A and Fig. 3B show different examples of temperature gradient generated among the rolling bearings 1 in the bearing device J having a configuration with four rows of bearings without cooling. The letters A to D in these figures denote the respective rows of the rolling bearings 1. In general, as shown in Fig. 3A, the bearing temperatures tend to be relatively higher in the middle two rows B, C and relatively lower in the rows A, D at the opposite ends. Where the motor 63, 63A (which is shown later in Fig. 11, Fig. 12) has a large influence, the bearing temperatures are relatively higher in the rows C, D on the side of the motor 63, 63A, as shown in Fig. 3B. Application of the cooling structure for the bearing device according to the above embodiment allows the rows A to D to have similar bearing temperatures, as shown in Fig. 3C.

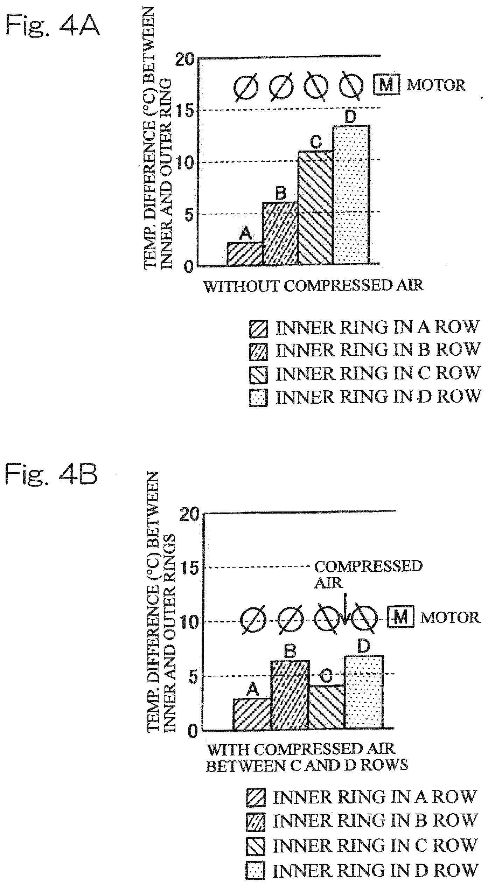

Fig. 4A shows an example of result of simulation showing a relation between locations of the bearings and bearing temperatures (temperature differences between the inner rings and the outer rings) in the bearing device J, in which a built-in motor 63A is disposed at the rear end of the spindle, when compressed air is not supplied. As shown in Fig. 4A, the bearing temperatures are higher in the rows C, D on the motor side when the compressed air is not supplied. Application of, for example, a cooling structure according to the embodiment shown in Fig. 1 and supply of the compressed air between the C and D rows equalize the bearing temperatures in the rows A to D to some extent, as shown in Fig. 4B.

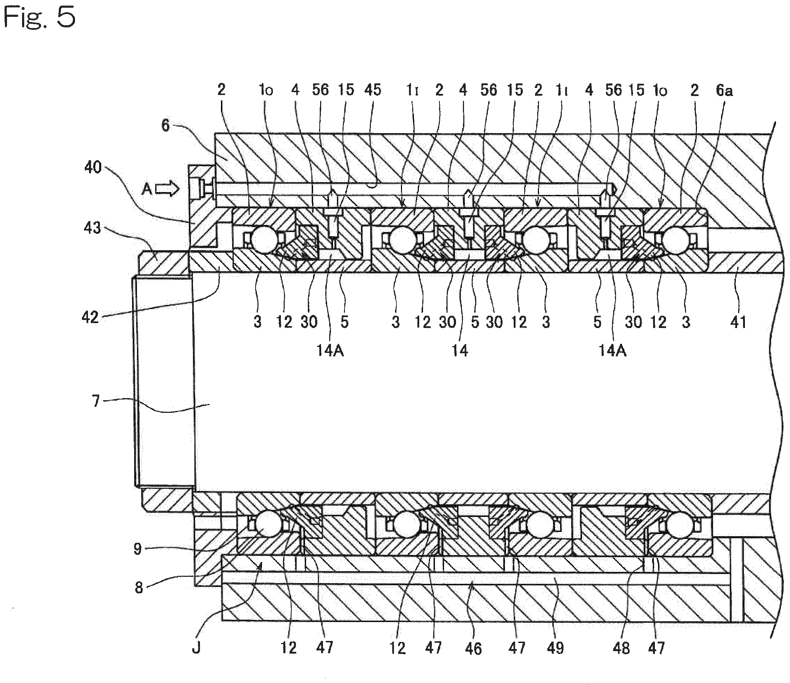

Next, details of the cooling structure for the bearing device shown in Fig. 1 will be described with reference to Fig. 5 to Fig. 12.

The cooling structure for a bearing device in this example is applied to a bearing device on the front side in a spindle device of a machine tool. It should be understood that application of the cooling structure is not limited to a spindle device of a machine tool.

In Fig. 5, the front side of the spindle is illustrated on the left side in the figure, and the rear side is illustrated on the right side. As shown in Fig. 5, the bearing device J includes three or more (four in the illustrated example) rolling bearings 1 arranged in the axial direction, each of the rolling bearings 1 having an outer ring 2 and an inner ring 3; outer ring spacers 4 interposed between the outer rings 2, 2 of the adjacent rolling bearings 1, 1; and inner ring spacers 5 interposed between the inner rings 3, 3 of the adjacent rolling bearings 1, 1. It should be noted that the rolling bearings 1 in the middle two rows are denoted with a subscript "I," and the rolling bearings 1 at the ends are denoted with a subscript "O"; however, they are simply referred to as "rolling bearings 1" when it is not necessary to distinguish them. The outer rings 2 and the outer ring spacers 4 are disposed in the housing 6, and the inner rings 3 and the inner ring spacers 5 are fitted to the spindle 7. Each of the rolling bearings 1 is an angular contact ball bearing and has a plurality of rolling elements 8 interposed between the raceway surfaces of the inner ring 3 and the outer ring 2. The respective rolling elements 8 are retained at equal intervals in the circumferential direction by a retainer 9. The two rolling bearings 1_{I}, 1_{I} in the middle are arranged back-to-back, and each of the two rolling bearings 1_{O}, 1_{O} at the opposite ends is arranged so as to have the same orientation as that of the adjacent rolling bearing li. The outer ring spacer 4 and the inner ring spacer 5 have a difference in width dimensions so that each of the rolling bearings 1 can be used with a set initial preload.

The outer rings 2 and the outer ring spacers 4 are, for example, fitted with loose fit with respect to the housing 6 and axially positioned by a stepped portion 6a of the housing 6 and an end face cover 40. On the other hand, the inner rings 3 of the rolling bearings 1 and the inner ring spacers 5 are, for example, fitted with interference fit with respect to the spindle 7 and axially positioned by positioning spacers 41, 42 on both sides. The positioning spacer 42 on the left side of Fig. 5 is fixed by a nut 43 screwed into the spindle 7. Each of the rolling bearings 1 is used by rotating the inner ring.

The cooling structure will be described.

Fig. 6 shows an enlarged view of a portion between the rolling bearings 1_{I}, 1_{I} in the middle two rows shown in Fig. 5. The outer ring spacer 4 has an outer ring spacer body 11 and flanges 12, 12 each having a ring shape, the flanges being separate from the outer ring spacer body 11. Each of the flanges 12 forms a lubrication fluid discharge unit 30 which will be described later. The outer ring spacer body 11 is formed so as to have a substantially T-shaped cross section, and the flanges 12, 12 are symmetrically positioned and fixed on both axial sides of the outer ring spacer body 11. The outer ring spacer body 11 has a larger inner diameter dimension than that of the flanges 12, 12. In this way, the outer ring spacer 4 has an inner circumferential surface formed with a recess 13 defined by an inner circumferential surface of the outer ring spacer body 11 and by side surfaces of the flanges 12, 12, which lead to the inner circumferential surface. The recess 13 is an annular groove having a substantially rectangular cross section. The recess 13 defines an annular space 14 between the outer ring 2 and the inner ring 3. The inner circumferential surface of the outer ring spacer 4 other than the recess 13, i.e., the inner circumferential surfaces of the flanges 12, 12 oppose from the outer circumferential surface of the inner ring spacer 5 with a small radial gap δa. In this way, the recess 13 and the outer circumferential surface of the inner ring spacer 5 define therebetween the annular space 14 having a larger radial width than that of other portion. The annular space 14 and the radial gap δa on both sides of the annular space 14 define the both-side exhaust passage 58.

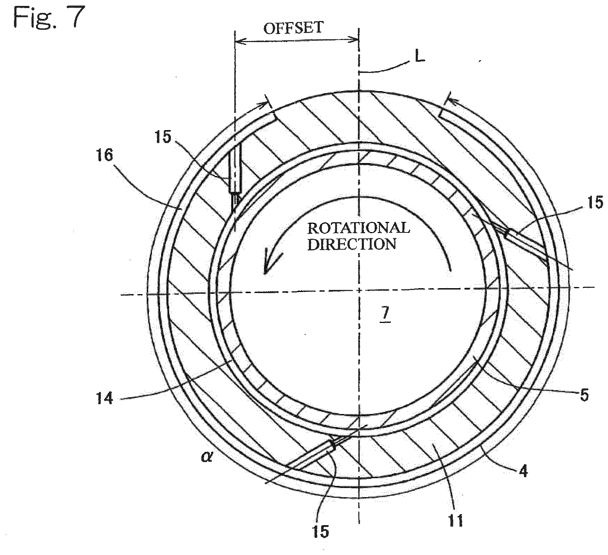

The outer ring spacer body 11 is provided with an air nozzle 15 configured to discharge compressed air A for cooling toward the outer circumferential surface of the inner ring spacer 5. The air nozzle 15 has an outlet 15a open to the recess 13 of the inner circumferential surface of the outer ring spacer 4. In this example, a plurality of (for example, three) air nozzles 15 are arranged at equal intervals in the circumferential direction (see Fig. 7).

As shown in Fig. 7, each air nozzle 15 is inclined forwardly in a rotational direction of the inner ring spacer 5. That is, each air nozzle is located at a position offset from any radial straight line L on a cross section perpendicular to the axis of the outer ring spacer 4, in a direction orthogonal to the straight line L. The air nozzle 15 is offset for the reason that the compressed air A thereby acts as a swirl flow in the rotation direction of the inner ring spacer 5 to improve the cooling effect. It should be noted that in Fig. 5 and Fig. 6, each of the outer ring spacers 4 is shown as a cross section which passes the center line of the air nozzle 15.

The outer ring spacer body 11 has an outer circumferential surface formed with an introduction groove 16 for introducing the compressed air A into the respective air nozzles 15 from the outside of the bearing. The introduction groove 16 is provided in an intermediate part in the axial direction on the outer circumferential surface of the outer ring spacer 4 and is formed so as to have a shape of a circular arc that communicates with the respective air nozzles 15. The introduction groove 16 is formed on the outer circumferential surface of the outer ring spacer body 11 over an angular range α that represents a major part in the circumferential direction, exclusive of a circumferential position where an air oil supply passage (not illustrated) that will be described later is provided. As shown in Fig. 5, the housing 6 is provided with a compressed air introduction passage 45, and the introduction groove 16 is formed so as to communicate with the compressed air introduction passage 45 via a branch passage 56. The housing 6 is externally provided with an air supply device 57 (Fig. 1) configured to supply the compressed air A to the compressed air introduction passage 45.

Fig. 8 shows an enlarged view of the rolling bearing 1_{O} at the end on the right side of Fig. 5 and the adjacent spacers. Description is omitted for the rolling bearing 1_{O} at the end on the left side of Fig. 5 and the adjacent spacers because they have the same configurations as those shown in Fig. 8, except for being arranged in a laterally symmetrical manner. Similarly, the rolling bearings 1_{O} and the adjacent spacers respectively have the same configurations as those of the rolling bearings 1_{I}, 1_{I} in the middle two rows and the spacers therebetween, unless otherwise specifically described.

In Fig. 8, the rolling bearing 1_{O} at the end has the outer ring spacer 4 provided with the flange 12 for the lubrication fluid supply unit 30 only on the side on which the rolling bearing 1_{O} at the end, which is a main cooling target, is located. The outer ring spacer 4 has a small diameter portion 2a on the inner circumferential surface on the opposite side from the flange 12, the small diameter portion 2a approaching the outer circumferential surface of the inner ring spacer 5 in a similar manner to that of the flange 12. An annular recess 13A is defined by a side surface of the small diameter portion 2a, a side surface of the flange 12 and a middle portion of the inner circumferential surface of the outer ring spacer 4 in the widthwise direction. The recess 13A defines an annular space 14A between the inner circumferential surface of the outer ring spacer 4 and the outer circumferential surface of the inner ring spacer 5. The small diameter portion 2a has a side surface on the annular space 14A side, which is an inclined surface whose inner diameter side approaches the end in the spacer width direction. The annular space 14A and the radial gap δa on one side of the annular space 14A define the one-side exhaust passage 59.

The annular space 14A is defined in an asymmetrical shape in the axial direction such that the annular space 14A has a portion 14A1 on the side of the rolling bearing 1_{O} at the end, which is a main cooling target, relative to the central axis O₁₅ of the air nozzle 15, the portion 14A1 having a larger volume than that of a portion 14A2 on the side of the middle rolling bearing li. In particular, the portion 14A1 of the annular space 14A has a longer axial length than that of the portion 14A2. A volume ratio of the portions 14A1, 14A2 of the annular space 14A may be suitably selected, such as 6:4, 7:3. The portion 14A2 that is smaller may be in a range from an opening edge of the air nozzle 15 to the central axis O₁₅, but may preferably be in a range from the central axis O₁₅ to a position at one fifth the width of the outer ring spacer in the direction toward the rolling bearing 1_{I} side, more preferably in a range from the central axis O₁₅ to a position at one tenth the width of the outer ring spacer in the direction toward the rolling bearing 1_{I} side.

A lubrication structure will be described.

As shown in Fig. 5, each of the outer ring spacers 4 has the flange(s) 12 (Fig. 6, Fig. 8) as a means for forming the lubrication fluid discharge unit 30. Each of the flanges 12 protrudes into the bearing and faces the outer circumferential surface of the inner ring 3 with an annular gap δb for air oil passage therebetween. Each of the flanges 12 is disposed so as to enter the bearing, covering the outer circumferential surface of the inner ring 3. Each of the flanges 12 has a tip end portion disposed radially inside with respect to the inner circumferential surface of the retainer 9.

Each of the two flanges 12 provided to the outer ring spacer 4 shown in Fig. 6 or the flange 12 provided to the outer ring spacer 4 shown in Fig. 8, in either case, has a lubrication nozzle 31 open to the annular gap δb between the flange 12 and the outer circumferential surface of the inner ring 3 to supply lubrication fluid, such as air oil. The lubrication nozzle 31 is inclined so as to approach the inner diameter side toward the bearing side and has an outlet open to a portion of the inner circumferential surface of the flange 12, which faces to the inner ring 3. The lubrication nozzle 31 is supplied with the air oil through a lubrication fluid supply passage (not illustrated) provided in the housing 6 and the outer ring spacer body 11. The inner ring 3 is provided with an annular recess 3a at a position at which the extension line of the lubrication nozzle 31 intersects the outer circumferential surface of the inner ring 3.

Oil of the air oil discharged from the lubrication nozzle 31 of the flange 12 accumulates in the annular recess 3a, and the oil is guided toward the bearing center side along the outer circumferential surface of the inner ring 3, which is an inclined surface, due to a centrifugal force associated with rotation of the inner ring 3.

An exhaust structure will be described.

As shown in Fig. 5, the bearing device J is provided with an exhaust passage 46 configured to exhaust the compressed air for cooling and air oil that is lubrication fluid for lubrication. The exhaust passage 46 includes an exhaust groove 47 provided in a portion of the outer ring spacer body 11 in the circumferential direction, and a radial exhaust hole 48 and an axial exhaust hole 49 that are provided in the housing 6 and communicate with the exhaust groove 47. The exhaust groove 47 in the outer ring spacer body 11 is defined over a circumferential position diagonal to a position at which the lubricant oil supply passage is provided.

The effect of the cooling structure for the bearing device having the above configuration will be described.

The cooling structure for the bearing device is formed from four rows of rolling bearings 2, as shown in Fig. 5. The compressed air is dividedly discharged from one air nozzle 15 for the two rolling bearings 1_{I}, 1_{I} in the middle, while the compressed air is separately discharged from air nozzles 15, 15 for the rolling bearings 1_{O}, 1_{O} at the opposite ends. Accordingly, it is possible to adjust the cooling function for each of the rolling bearings 1 in accordance with the locations of the rolling bearings 1. It is also possible to effectively cool the individual rolling bearings 1 in the following manner.

Each of the outer ring spacers 4 shown in Fig. 6 and Fig. 8 has the air nozzle 15 that allows the compressed air A for cooling to be blown toward the outer circumferential surface of the inner ring spacer 5. Here, the compressed air A is discharged from the narrow air nozzle 15 into the large annular space 14, 14A, causing the compressed air A to adiabatically expand. When the compressed air A inside the air nozzle 15 has a volume VI and a temperature T1, and the compressed air in the annular space 14, 14A has a volume V2 and a temperature T2, the temperatures and volumes can be expressed as V1<V2 and T1>T2, respectively, according to the equation of state of gas (ideal gas law) and the first law of thermodynamics. That is, in the annular space 14, 14A, the temperature of the compressed air A decreases as its volume increases. Increase in the volume causes increase in a flow velocity of the compressed air A. In such a way, the inner ring spacer 5 can be efficiently cooled by blowing the compressed air A having a low temperature at a high speed onto the inner ring spacer 5.

As the air nozzle 15 is inclined forwardly in the rotational direction of the inner ring spacer 5, the compressed air A discharged from the air nozzle 15 flows in the axial direction while swirling along the outer circumferential surface of the inner ring spacer 5 and is exhausted to the outside of the bearing via the exhaust passage 46. As the compressed air A swirls, the compressed air A contacts the outer circumferential surface of the inner ring spacer 5 for a longer time, when compared with the case where the compressed air flows straightly in the axial direction. Thus, the inner ring spacer 5 can be more efficiently cooled.

In this way, by efficiently cooling the inner ring spacer 5, the inner ring 3 of the rolling bearing 1 and the spindle 7 can be effectively cooled via the inner ring spacer 5. The cooling efficiency of this cooling structure can be improved merely by contriving the structure in such a way that the outer ring spacer 4 has the inner circumferential surface provided with an annular recess 13, 13A and that the air nozzle 15 is inclined. Therefore, the air supply device for supplying the compressed air A does not have to have a large output, and power consumption can be suppressed.

In addition, provision of the recess 13, 13A on the inner circumferential surface of the outer ring spacer 4 provides the following effect. That is, the compressed air A discharged into the annular space 14, 14A between the recess 13, 13A and the inner ring spacer 5 is exhausted to the outside of the bearing via the radial gap δa between the outer ring spacer 4 and the inner ring spacer 5. In this process, at least a part of the compressed air A flows into the bearing. As the radial gap δa is narrower than the annular space 14, 14A, a flow velocity of the compressed air A flowing through the radial gap δa is made uniform in each part in the circumferential direction, resulting in a uniform flow velocity of the compressed air A flowing into the bearing. In this way, collision noise generated between the compressed air A and the rolling elements 8 during rotation can be suppressed.

Next, an explanation will be given with respect to selectively supplying the compressed air to the rolling bearing 1 on one side as well as preventing flow mixing between the flows of the lubrication fluid and the compressed air in the rolling bearing 1 on the opposite side. In Fig. 1, the flow of the compressed air is shown with arrows of the same thickness as that of visible outlines, and the flow of the lubrication fluid is shown with wide line arrows. The compressed air discharged from the air nozzle 15 of the outer ring spacer 4 that is adjacent to the rolling bearing 1_{O} at the end passes through the gap between the outer ring spacer 4 and the inner ring spacer 5, enters the next rolling bearing 1_{I} on the side of the middle section, and then is mixed with the flow of the lubrication fluid.

However, in this embodiment, the annular space 14A of the outer ring spacer 4 adjacent to the rolling bearing 1_{O} at the end is defined in an asymmetrical shape in the axial direction such that the annular space 14A has a portion 14A1 on the side of the rolling bearing 1_{O} at the end relative to the central axis O₁₅ of the air nozzle 15, the portion 14A1 having a larger volume than that of a portion 14A2 on the side of the middle rolling bearing 1_{I}, as described above.

That is, in the annular space 14A, the portion 14A1 on the supply side of lubrication fluid (the side on which the lubrication fluid discharge unit is provided) relative to the central axis O₁₅ of the air nozzle 15 has a larger volume than that of the portion 14A2 on the non-supply side (the side on which the lubrication fluid discharge unit is not provided). The compressed air discharged into the annular space 14A is more likely to flow toward the side of the space portion 14A1 that has a larger volume, i.e., toward the rolling bearing 1_{O} at the end which is the supply side of the lubrication fluid. Thus, the rolling bearing 1_{O} can be effectively cooled. In addition, as less compressed air flows toward the rolling bearing 1_{I} on the opposite side, mixing of the flows of the compressed air and of the lubrication fluid supplied from other outer ring spacer 4 is reduced in the rolling bearing 1_{I} on the opposite side.

Fig. 9 and Fig. 10 show a second embodiment of the present invention. This embodiment has the same configuration as that of the first embodiment described with reference to Fig. 1 to Fig. 8, unless otherwise specifically described. In the second embodiment, an annular space 14B defined between the outer ring spacer 4 and the inner ring spacer 5 that are adjacent to the rolling bearing 1_{O} at the end is defined by the recess 13a formed on the inner circumferential surface of the outer ring spacer 4 and by the recess 13b formed on the outer circumferential surface of the inner ring spacer 5.

As in the example shown in Fig. 8, where the annular space 14A is defined only by the recess 13A that is formed on the inner circumferential surface of the outer ring spacer 4, the inner ring spacer 5 may have a simple shape without unevenness, which is easy to produce. However, due to the limitation in the radial dimension of the outer ring spacer 4, it may be difficult to have the annular space 14A with a sufficient volume. In contrast, as in the second embodiment shown in Fig. 9 and Fig. 10, where the annular space 14B is defined by the recess 13a formed on the outer ring spacer 4 and the recess 13b formed on the inner ring spacer 5, it is possible to obtain the annular space 14B with a large volume so as to allow the compressed air discharged from the air nozzle 15 to adiabatically expand sufficiently, and thereby enhance the cooling effect.

Fig. 11 shows a sectional view showing an overview of a spindle device of a machine tool to which each of the embodiments described above is applied. The spindle 7 has a front portion supported by a bearing device J according to any one of the above embodiments and a rear portion supported by another rolling bearing 61. The housing 6 has an outer circumference provided with a liquid cooling device 62 of an outer cylinder cooling type. The spindle 7 has a rear end coupled to an electric motor 63 outside the housing 6.

Fig. 12 shows another example of a spindle device of a machine tool to which the bearing device is applied, the spindle device being of the built-in motor type. An electric motor 63A is provided between the bearing device J on the front side and the bearing 61 on the rear side within the housing 6. The electric motor 63A is a built-in motor formed from a stator 64 provided on the inner circumference of the housing 6 and a rotor 65 provided on the outer circumference of the spindle 7.

As shown in the respective examples in Fig. 11 and Fig. 12, a cooling structure for a bearing device according to the present invention can be effectively applied to any spindle device of the external motor type or the built-in motor type.

Although the preferred embodiments of the present invention have been described above with reference to the accompanying drawings, those skilled in the art would easily conceive of various changes and modifications within the obvious range in view of the specification. Accordingly, such changes and modifications are to be construed as included in the scope of the present invention defined by the appended claims.

### [Reference Numerals]

- 1, 1_{O}, 1_{I}: rolling bearing
- 2: outer ring
- 3: inner ring
- 4: outer ring spacer
- 5: inner ring spacer
- 6: housing
- 7: spindle
- 8: rolling element
- 11: outer ring spacer body
- 12: flange
- 13, 13A, 13a, 13b: recess
- 14, 14A, 14B: annular space
- 14A1, 14A2: portion of the annular space
- 15: air nozzle
- 30: lubrication fluid discharge unit
- 31: lubrication nozzle
- 45: compressed air introduction passage
- 46: exhaust passage
- 51: valve
- 52: control unit
- 56: branch air supply passage
- 57: air supply device
- 58: both-side exhaust passage
- 59: one-side exhaust passage
- A: compressed air
- O₁₅: central axis

## Claims

1. A cooling structure with a bearing device, the bearing device having: rolling bearings (1, 1_{O}, 1_{I}), each of the rolling bearings (1, 1_{O}, 1_{I}) having an outer ring (2) and an inner ring (3); outer ring spacers (4) interposed between the outer rings (2) of the respective rolling bearings (1, 1_{O}, 1_{I}) adjacent in the rows; and inner ring spacers (5) interposed between the inner rings (3) of the respective rolling bearings (1, 1_{O}, 1_{I}) adjacent in the rows, the outer rings (2) and the outer ring spacers (5) being disposed on an inner circumference of a housing (6), the inner rings (3) and the inner ring spacers (5) being fitted to an outer circumference of a rotation shaft, the cooling structure comprising:
air nozzles (15) provided in a plurality of the outer ring spacers (4) and configured to discharge compressed air toward the inner ring spacers (5) that face the outer ring spacers (4);
valves (51) configured to regulate the compressed air discharged from the respective air nozzles (15);
a control unit (52) configured to control the valves (51); and
a plurality of temperature measuring units configured to measure temperatures of the rolling bearings in the three or more rows,
wherein the control unit (52) uses measurement values of the temperatures obtained by the plurality of temperature measuring units to control the valves so that the compressed air is discharged from the air nozzle (15) selected in accordance with a predetermined rule,
wherein the cooling structure comprises:
a one-side exhaust passage (59) between any of the outer ring spacers (4) and the inner ring spacer (5) which corresponds to said outer ring spacer (4), the one-side exhaust passage (59) being configured to exhaust the compressed air discharged from the air nozzle (15) toward the rolling bearing (1, 1_{O}, 1_{I}) on one side, which is adjacent to said outer ring spacer (4),
**characterized in that**,
the bearing device has rolling bearings (1, 1o, 1i) arranged in three or more rows in an axial direction,
and **in that** the cooling structure comprises:
a both-side exhaust passage (58) between any of the other outer ring spacers (4) and the inner ring spacer (5) which corresponds to said outer ring spacer (4), the both-side exhaust passage (58) being configured to exhaust the compressed air discharged from the air nozzle (15) toward the rolling bearings on both sides, which are adjacent to said outer ring spacer (4);
and wherein the one-side exhaust passage (59) has a gap (δₐ) between the outer ring spacer (4) and the inner ring spacer (5); and an annular space (14A) defined between the outer ring spacer (4) and the inner ring spacer (5), the annular space (14A) having a larger radial dimension than that of the gap (δₐ),
the air nozzle (15) is open to the annular space (14A),
the annular space (14A) has a portion on one side relative to a central axis (O₁₅) of the air nozzle (15), the portion (14A1) having a larger volume than that of a portion (14A2) on the other side, and
the one-side exhaust passage (59) being configured to exhaust the compressed air discharged from the air nozzle (15) toward the rolling bearing (1_{O}) on the side of the portion (14A1) on one side of the annular space (14A).

2. The cooling structure with a bearing device as claimed in claim 1, wherein the control unit (52) is configured to use the measurement values of the temperatures obtained by the plurality of temperature measuring units to control the valves (51) so that the compressed air is discharged from the air nozzle (15) that faces the inner ring spacer (5) adjacent to the rolling bearing (1, 1_{O}, 1_{I}) having a highest temperature.

3. The cooling structure with a bearing device as claimed in claim 1 or 2, wherein each of the outer ring spacers (4) having the air nozzles (15) has a lubrication fluid discharge unit (30) configured to supply lubrication fluid including air and lubrication oil to the adjacent rolling bearing (1, 1_{O}, 1_{I}).

## Patentansprüche

1. Kühlstruktur mit einer Lagervorrichtung, wobei die Lagervorrichtung Folgendes umfasst: Wälzlager (1, 1_{O}, 1_{I}), wobei jedes der Wälzlager (1, 1_{O}, 1_{I}) einen Außenring (2) und einen Innenring (3) umfasst; Außenringabstandshalter (4), die zwischen den Außenringen (2) der jeweiligen in den Reihen benachbarten Wälzlager (1, 1_{O}, 1_{I}) angeordnet sind; und Innenringabstandshalter (5), die zwischen den Innenringen (3) der jeweiligen in den Reihen benachbarten Wälzlager (1, 1_{O}, 1_{I}) angeordnet sind, wobei die Außenringe (2) und die Außenringabstandshalter (5) an einem Innenumfang eines Gehäuses (6) angeordnet sind, wobei die Innenringe (3) und die Innenringabstandshalter (5) an einem Außenumfang einer Drehwelle montiert sind,
wobei die Kühlstruktur Folgendes umfasst:
Luftdüsen (15), die in einer Vielzahl der Außenringabstandshalter (4) vorgesehen sind und zum Abgeben von Druckluft an die Innenringabstandshalter (5), die den Außenringabstandshaltern (4) gegenüberliegen, ausgebildet sind;
Ventile (51), die zum Regulieren der von den jeweiligen Luftdüsen (15) abgegebenen Druckluft ausgebildet sind;
eine Steuereinheit (52), die zum Steuern der Ventile (51) ausgebildet ist; und
eine Vielzahl von Temperaturmesseinheiten, die zum Messen von Temperaturen der Wälzlager in den drei oder mehr Reihen ausgebildet sind, wobei die Steuereinheit (52) durch die Vielzahl der Temperaturmesseinheiten erhaltene Messwerte der Temperaturen zur Steuerung der Ventile nutzt, so dass die Druckluft aus einer nach einer vorgegebenen Regel ausgewählten Luftdüse (15) abgegeben wird,
wobei die Kühlstruktur Folgendes umfasst:
je einen einseitigen Abführkanal (59) zwischen einem der Außenringabstandshalter (4) und dem Innenringabstandshalter (5), der diesem Außenringabstandshalter (4) entspricht, wobei der einseitige Abführkanal (59) zum Abführen der von der Luftdüse (15) an das dem Außenringabstandshalter (4) benachbarte Wälzlager (1, 1_{O}, 1_{I}) abgegebenen Druckluft auf einer Seite ausgebildet ist,
**dadurch gekennzeichnet, dass**
die Lagervorrichtung Wälzlager (1, 1_{O}, 1_{I}) umfasst, die in einer axialen Richtung in drei oder mehr Reihen angeordnet sind,
und dass die Kühlstruktur Folgendes umfasst:
einen beidseitigen Abführkanal (58) zwischen je einem der anderen Außenringabstandshalter (4) und dem Innenringabstandshalter (5), der diesem Außenringabstandshalter (4) entspricht, wobei der beidseitige Abführkanal (58) zum Abführen der von der Luftdüse (15) an die dem Außenringabstandshalter (4) benachbarten Wälzlager (1, 1_{O}, 1_{I}) abgegebenen Druckluft auf beiden Seiten ausgebildet ist;
und wobei der einseitige Abführkanal (59) einen Spalt (δₐ) zwischen dem Außenringabstandshalter (4) und dem Innenringabstandshalter (5) und einen ringförmigen Raum (14A), der zwischen dem Außenringabstandshalter (4) und dem Innenringabstandshalter (5) ausgebildet ist, aufweist, wobei die radiale Ausdehnung des ringförmigen Raums (14A) größer ist als die des Spalts (δₐ),
wobei die Luftdüse (15) zum ringförmigen Raum (14A) hin offen ist,
wobei der ringförmige Raum (14A) einen Abschnitt auf einer Seite relativ zur Mittelachse (O₁₅) der Luftdüse hat, wobei der Abschnitt (14A1) ein größeres Volumen als ein Abschnitt (14A2) auf der anderen Seite hat, und
wobei der einseitige Abführkanal (59) zum Abführen der von der Luftdüse (15) an das Wälzlager (1_{O}) abgegebenen Druckluft auf der Seite des Abschnitts (14A1) auf einer Seite des ringförmigen Raums (14A) ausgebildet ist.

2. Kühlstruktur mit einer Lagervorrichtung nach Anspruch 1, wobei die Steuereinheit (52) dazu ausgebildet ist, die durch die Vielzahl der Temperaturmesseinheiten erhaltenen Messwerte der Temperaturen zur Steuerung der Ventile (51) zu nutzen, so dass die Druckluft aus der Luftdüse (15) abgegeben wird, die dem Innenringabstandshalter (5) zugewandt ist, der dem Wälzlager (1, 1_{O}, 1_{I}) mit einer höchsten Temperatur benachbart ist.

3. Kühlstruktur mit einer Lagervorrichtung nach Anspruch 1 oder 2, wobei jeder der die Luftdüsen (15) aufweisenden Außenringabstandshalter (4) eine Schmierstoff-Abgabeeinheit (30) aufweist, die zum Versorgen des benachbarten Wälzlagers (1, 1_{O}, 1_{I}) mit Luft und Schmieröl enthaltendem Schmierstoff ausgebildet ist.

## Revendications

1. Structure de refroidissement ayant un dispositif de palier, le dispositif de palier comprenant : des paliers à roulement (1, 1_{O}, 1_{I}), chacun des paliers à roulement (1, 1_{O}, 1_{I}) ayant une bague extérieure (2) et une bague intérieure (3) ; des éléments d'espacement de bague extérieure (4) disposés entre les bagues extérieures (2) des paliers à roulement (1, 1_{O}, 1_{I}) respectifs adjacents dans les rangées ; et des éléments d'espacement de bague intérieure (5) disposés entre les bagues intérieures (3) des paliers à roulement (1, 1_{O}, 1_{I}) respectifs adjacents dans les rangées, les bagues extérieures (5) et les éléments d'espacement de bague extérieure (5) étant disposés sur une circonférence intérieure d'un boîtier (6), les bagues intérieures (3) et les éléments d'espacement de bague intérieure (5) étant fixés à une circonférence extérieure d'un arbre de rotation,
la structure de refroidissement comprenant :
des buses d'air (15) qui sont prévues dans une pluralité d'éléments d'espacement de bague extérieure (4) et qui sont destinées à décharger de l'air comprimé vers les éléments d'espacement de bague intérieure (5) qui sont en face des éléments d'espacement de bague extérieure (4) ;
des soupapes (51) qui sont destinées à réguler l'air comprimé déchargé des buses d'air (15) respectives :
une unité de commande (52) qui est destinée à commander les soupapes (51) ; et
une pluralité d'unités de mesure de température qui sont destinées à mesurer des températures des paliers à roulement dans les trois rangées ou plus, dans lequel l'unité de commande (52) utilise des valeurs de mesure des températures obtenues par la pluralité d'unités de mesure de température pour commander les soupapes, de sorte que l'air comprimé est déchargé de la buse d'air (15) qui est sélectionnée conformément à une règle prédéterminée,
dans lequel la structure de refroidissement comprend :
un passage d'échappement (59) d'un côté entre les éléments d'espacement de bague extérieure (4) et l'élément d'espacement de bague intérieure (5) qui correspond audit élément d'espacement de bague extérieure (4), le passage d'échappement (59) d'un côté étant destiné à échapper l'air comprimé déchargé de la buse d'air (15) vers le palier à roulement (1, 1_{O}, 1_{I}) d'un côté qui est adjacent audit élément d'espacement de bague extérieure (4),
**caractérisée en ce que**
le dispositif de palier a des paliers à roulement (1, 1_{O}, 1_{I}) disposés en trois rangées ou plus dans une direction axiale,
et **en ce que** la structure de refroidissement comprend :
un passage d'échappement (58) des deux côtés entre les autres éléments d'espacement de bague extérieure (4) et l'élément d'espacement de bague intérieure (5) qui correspond audit élément d'espacement de bague extérieure (4), le passage d'échappement (58) des deux côtés étant destiné à échapper l'air comprimé déchargé de la buse d'air (15) vers les paliers à roulement des deux côtés qui sont adjacents audit élément d'espacement de bague extérieure (4) ;
et
dans lequel le passage d'échappement (59) d'un côté a un écart (δₐ) entre l'élément d'espacement de bague extérieure (4) et l'élément d'espacement de bague intérieure (5) ; et un espace annulaire (14A) défini entre l'élément d'espacement de bague extérieure (4) et l'élément d'espacement de bague intérieure (5), l'espace annulaire (14A) ayant une dimension radiale plus grande que l'écart (δₐ),
la buse d'air (15) est ouverte à l'espace annulaire (14A),
l'espace annulaire (14A) a une partie d'un côté par rapport à un axe central (O₁₅) de la buse d'air (15), la partie (14A1) ayant un volume plus grand qu'une partie (14A2) de l'autre côté, et
le passage d'échappement (59) d'un côté étant destiné à échapper l'air comprimé déchargé de la buse d'air (15) vers le palier à roulement (1_{O}) du côté de la partie (14A1) d'un côté de l'espace annulaire (14A).

2. Structure de refroidissement ayant un dispositif de palier selon la revendication 1, dans lequel l'unité de commande (52) est destinée à utiliser les valeurs de mesure des températures obtenues par la pluralité d'unités de mesure de température pour commander les soupapes (51), de sorte que l'air comprimé est déchargé de la buse d'air (15) tournée vers l'élément d'espacement de bague intérieure (5) adjacent au palier à roulement (1, 1_{O}, 1_{I}) ayant une plus haute température.

3. Structure de refroidissement ayant un dispositif de palier selon la revendication 1 ou la revendication 2, dans lequel chacun des éléments d'espacement de bague extérieure (4) ayant les buses d'air (15) a une unité de décharge de fluide de lubrification (30) qui est destinée à fournir de fluide de lubrification comprenant de l'air et de l'huile de lubrification au palier à roulement (1, 1_{O}, 1_{I}) adjacent.
